# EUROPÄISCHE PATENTSCHRIFT

(11) **EP 3 658 996 B1**
(45) Veröffentlichungstag und Bekanntmachung des Hinweises auf die Patenterteilung: **01.09.2021**
(21) Anmeldenummer: 18793582.0
(22) Anmeldetag: 11.10.2018
(51) Int. Cl.: G05B 19/408, B23Q 15/10

(54) **VERFAHREN ZUM BETRIEB EINER NUMERISCH GESTEUERTEN PRODUKTIONSANLAGE SOWIE PRODUKTIONSANLAGE DAZU**
PRODUCTION SYSTEM AND METHOD FOR OPERATING A NUMERICALLY CONTROLLED PRODUCTION SYSTEM
PROCÉDÉ DE FONCTIONNEMENT D'UNE INSTALLATION DE PRODUCTION À COMMANDE NUMÉRIQUE AINSI QU'INSTALLATION DE PRODUCTION CORRESPONDANTE

(30) Priorität: 02.11.2017 EP 17199665
(43) Veröffentlichungstag der Anmeldung: 03.06.2020
(73) Patentinhaber: Siemens Aktiengesellschaft, 80333 München (DE)
(72) Erfinder: PITZ, Thomas, 71277 Rutesheim (DE); SPIELMANN, Ralf, 70569 Stuttgart (DE)
(86) Internationale Anmeldenummer: PCT/EP2018/077738
(87) Internationale Veröffentlichungsnummer: WO 2019/086226

(56) Entgegenhaltungen:
- DE-A1-102015 105 436
- US-A1- 2004 138 776
- US-A1- 2006 229 761
- US-A1- 2017 075 341

## Beschreibung

Die Erfindung betrifft ein Verfahren zum Betrieb einer numerisch gesteuerten Produktionsanlage, insbesondere einer Werkzeugmaschine, die mit einer numerischen Steuerung verbunden ist,
- wobei in der numerischen Steuerung ein Steuerprogramm mit aufeinanderfolgenden Steuerprogrammsätzen vorhanden ist,
- wobei die numerische Steuerung ein Look-Ahead-Modul umfasst,
- wobei das Look-Ahead-Modul aus mehreren aufeinanderfolgenden Steuerprogrammsätzen vor einer Bewegung selbst für mindestens eine Bewegungsachse ein Bewegungsprofil bestimmt, das für aufeinanderfolgende Taktzeitpunkte Führungsgrößen zur Weg-Zeit-Bewegung für die mindestens eine Bewegungsachse umfasst, und
- wobei das Steuerprogramm mindestens eine von einer Bedingung gesteuerte Programmverzweigung mit mehreren nachfolgenden alternativen Steuerprogrammabschnitten umfasst, die festlegt, welcher der alternativen Steuerprogrammabschnitte in Abhängigkeit der Bedingung weiter ausgeführt wird.

Die Erfindung betrifft weiterhin eine Produktionsanlage mit einer numerischen Steuerung.

Zur Bewegungsdefinition von numerisch gesteuerten Produktionsanlagen, z.B. von Zigarettenabfüll-Anlagen oder von Anlagen, die einzelne, filigrane Produkte bewegen, insbesondere aber auch von Werkzeugmaschinen, gibt es Programmiersprachen, die den Umfang der Steuerungsmöglichkeiten definieren, siehe DIN (ISO) 66025 für CNC-Steuerungen. Ein in einer derartigen Programmiersprache erstelltes Steuerprogramm umfasst aufeinanderfolgende Programmsätze, die eine Bewegung zu einem Zielpunkt inklusive entsprechender Randbedingungen repräsentieren sowie auch Programmsätze ohne Bewegungsdefinition, wie beispielsweise Vorschubvorgaben, Angaben zu den verwendeten Koordinatensystemen, Angaben zur Bemaßungsart usw. Der entsprechende Quelltext für die Sätze, auch G-Code genannt, ist für alle Steuerungshersteller verbindlich, er kann jedoch durch herstellerspezifische Zyklen oder Funktionen ergänzt bzw. erweitert werden.

Diese Programmiersprachen und auch deren steuerungsspezifischen Erweiterungen bieten heute auch die Möglichkeit, Kontrollanweisungen in Form von bedingten Programmverzweigungen wie beispielsweise "switch/case", "if/then" etc. zu programmieren, die nur unter einer bestimmten Bedingung ausgeführt wird. Die Verzweigung legt fest, welcher von zwei oder mehr nachfolgenden alternativen Steuerprogrammabschnitten abhängig von einer oder mehreren Bedingungen ausgeführt wird.

Steuerungen von Produktionsanlagen, insbesondere auch von Werkzeugmaschinen, werden typischerweise als Echtzeitsteuerungen ausgeführt, um auf relevante Parameteränderungen schnell reagieren zu können. Beispiele für relevante Parameteränderungen im Zusammenhang mit Werkzeugmaschinen sind der Abnutzungsgrad des Werkzeugs, eine festgestellte Qualität des Werkstückes vor der Bearbeitung, Adaptionen der Werkzeugmaschine an die Umgebung, z.B. an die Temperatur, Kompensation des Durchhangs von mechanischen Komponenten der Werkzeugmaschine Mechanik, fehlende Bohrungen etc.

Eine typische Realisierung der Echtzeitsteuerung ist, dass in der Steuerung eine Art Zukunft berechnet wird. Dafür ist auch der Begriff Look-Ahead gebräuchlich. Dabei werden im Voraus oder vorbereitend (englisch: "preparation") vor der eigentlichen Aktion, beispielsweise einer Achsbewegung zur Werkstückbearbeitung, alle für diese Aktion notwendigen Informationen vollständig bestimmt. Sie stehen dann zur Echtzeit oder zur Bearbeitungszeit unmittelbar und direkt zur Verfügung. Es wird beispielsweise in einer Werkzeugmaschine über eine Anzahl von Anweisungen des Teileprogramms ermittelt, wohin eine von der Werkzeugmaschine auszuführende Bewegung gehen soll und mit welcher Dynamik diese Bewegung ausgeführt werden kann. Wie weit eine Steuerung in die Zukunft rechnet, hängt von der Steuerung selbst ab, beispielsweise von der Größe des dafür vorgesehenen Speichers, der zur Verfügung stehenden Performance und letztlich, ob Zwangssynchronisierungen zwischen Echtzeit und Zukunft notwendig sind.

Eine Zwangssynchronisierung ist dann erforderlich, wenn weitere Aktionen von einem aktuellen Zustand oder mehreren aktuellen Zuständen der Produktionsanlage oder des zu produzierenden Erzeugnisses abhängig sind.

Während in der Nicht-Echtzeit-Software-Technik bedingte Programmverzweigungen im Programmablauf bzw. der Programmabarbeitung kein Problem darstellen, erzeugen bedingte Programmverzweigungen in Echtzeit das Problem, dass abhängig von der Bedingung einer Programmverzweigung mehrere, jedoch mindestens zwei mögliche Varianten von zukünftigen Aktionen möglich sind.

Bei den heutigen Steuerungen mit Echtzeiteinfluss wird die Zukunft nur bis zum Entscheidungszeitpunkt der nächsten folgenden Bedingung einer bedingten Programmverzweigung berechnet. Zum Zeitpunkt des Eintritts der Bedingung und damit nach der Festlegung des Weiteren Steuerprogrammzweiges wird eine Zwangssynchronisierung zwischen Echtzeit und Zukunft durchgeführt. Diese Zwangssynchronisation hat den Nachteil, dass die Zukunft eines von mehreren alternativ möglichen Zweigen oder Programmabschnitten erst dann berechnet wird, wenn aufgrund der Entscheidung feststeht, welcher Zweig oder welcher Programmabschnitt zur weiteren Bearbeitung oder für weitere Aktionen ausgeführt wird. Die Berechnung der Zukunft des zur Bearbeitung bestimmten Programmabschnitts hat eine Verzögerung der Abarbeitung zur Folge hat. Insbesondere, wenn mehrere Programmverzweigungen im Programm zur Bearbeitung vorgesehen sind, verlängert sich bei jeder Programmverzweigung die Programmabarbeitungszeit, was sich am Ende zu einer oftmals nicht unerheblichen Verzögerung aufsummiert.

In der DE 10 2015 105 436 A1 ist ein Steuerungssystem mit einer Maschinensteuerung zur Steuerung einer Maschine beschrieben, wobei die Maschinensteuerung ein Übersetzungsmodul und ein Verarbeitungsmodul umfasst. Das Übersetzungsmodul ist derart ausgebildet, einen Eingangsprogrammcode eines Steuerprogramms zu verarbeiten und aus diesem einen einheitlichen Zwischencode mit Arbeitsanweisungen zur Ausführung durch die Maschinensteuerung zu erzeugen. Das Verarbeitungsmodul ist derart ausgebildet, den Zwischencode mit Arbeitsanweisungen zu verarbeiten und auf Grundlage der Arbeitsanweisungen Steuerbefehle zur Steuerung einer an die Maschinensteuerung angeschlossenen Maschine zu erzeugen. Das Verarbeitungsmodul umfasst dabei ein Ausführungsmodul und einen NC-Prozessor, wobei das Ausführungsmodul dazu ausgebildet ist, auf Grundlage der Arbeitsanweisungen des Zwischencodes eine NC-Anweisung zu erzeugen und an den NC-Prozessor zu übertragen. Der NC-Prozessor ist dazu ausgebildet, auf Grundlage der NC-Anweisung den Steuerbefehl zu erzeugen. Zur Erzeugung einer der NC-Anweisungen, die beispielsweise eine Folge von G-Code-Worten repräsentiert, umfasst der Zwischencode Arbeitsanweisungen, nach denen das Ausführungsmodul zunächst alle Werte der Folge berechnet. Außerdem umfasst der Zwischencode abschließende Arbeitsanweisungen, nach denen das Ausführungsmodul sequentiell alle Datenpaare in die die NC-Anweisung repräsentierende Datenstruktur schreibt und die Datenstruktur an den NC-Prozessor überträgt. Dabei kann beispielsweise für jeweils den G-Code-Satz, den der Eingangsprogrammcode umfasst, jeweils eine der NC-Anweisungen erzeugt und an den NC-Prozessor übermittelt werden.

Die US 2006/229761 A1 betrifft eine numerische Steuerung mit Displayfunktion. Dort zeigt die numerische Steuerung eine Anzahl von Blöcken, die das Bearbeitungsprogramm bilden. Zusätzlich markiert eine Skip-Funktion diejenigen Blöcke, die nicht abgearbeitet, aber dennoch angezeigt werden. Der Maschinenführer ist kann somit sehen, welcher der Blöcke gerade abgearbeitet wird. Das ist vorteilhaft bei bedingten Verzweigungen im NC-Programm.

Die US 2017/0075341 A1 betrifft eine numerische Steuervorrichtung zur Steuerung einer Maschine mit einer programmierbaren Steuerung. Die programmierbare Steuerung führt die Eingabe und Ausgabe eines Signals basierend auf einem Stufenprogramm und die Steuerung einer Maschine basierend auf einem NC-Programm durch. Die numerische Steuervorrichtung umfasst eine erste Tabelle, die die zur Steuerung der Maschine benutzte Funktion, ein Eingabesignal und ein Ausgabesignal assoziiert, und eine zweite Tabelle, die das Eingabesignal, das Ausgabesignal und ein Signal in einem abhängigen Verhältnis mit dem Eingabesignal und dem Ausgabesignal assoziiert. Basierend auf einem Funktionscode einer Funktion, die von einem vorab gelesenen Block des NC-Programms befehligt wurde, verweist die numerische Steuervorrichtung auf die erste und die zweite Tabelle, identifiziert ein der automatischen Protokollierung unterliegendes Signal und führt die Protokollierung durch.

Die US 2004/0138776 A1 betrifft ein Verfahren bzw. eine Vorrichtung zur numerischen Steuerung, womit komplexe und umfangreiche Aufgabenstellungen leichter bewerkstelligbar sind. Dies wird in einer numerischen Steuerung realisiert, bei der in einem Interpolationstakt Kennsignale, insbesondere Lagesollwerte für Systemkomponenten, insbesondere Antriebe, generierbar sind. Eine Leitachse liefert im Interpolationstakt Referenzwerte zum Auslesen einer Tabelle, durch die dazu Lagesollwerte für eine asynchrone Folgeachse abfragbar sind. In der Tabelle sind auch unabhängig vom Interpolationstakt start- und gegebenenfalls endauslösende Schaltfunktionen hinterlegbar. Sobald der Interpolationstakt den Zeitpunkt eines Referenzwertes erreicht oder überschritten hat, ist eine Ausführung der Funktion, welche in der Tabelle abgelegt ist, auslösbar.

Der Erfindung liegt die Aufgabe zugrunde, ein Verfahren zum zeitoptimalen Betrieb der eingangs genannten numerisch gesteuerten Produktionsanlage anzugeben, auch wenn das Steuerprogramm zum Betrieb der Produktionsanlage mindestens eine bedingte Programmverzweigung umfasst.

Der Erfindung liegt weiterhin die Aufgabe zugrunde, eine Produktionsanlage mit einer numerischen Steuerung anzugeben, die zur Durchführung des Betriebsverfahrens ausgebildet ist.

Die erstgenannte Aufgabe wird durch ein Verfahren mit den Merkmalen des Anspruchs 1 gelöst. Danach ist das eingangs genannte Verfahren zum Betrieb einer numerisch gesteuerten Produktionsanlage dadurch gekennzeichnet, dass das Look-Ahead-Modul für jeden alternativen Steuerprogrammabschnitt vor einer weiteren Bewegung ein alternatives Bewegungsprofil berechnet und speichert und an der bedingten Programmverzweigung zur Durchführung der weiteren Bewegung bereit hält.

Die Erfindung besteht also im "parallelen" Vorausberechnen aller möglichen Bewegungsprofile in der "näheren Zukunft" des Programmablaufs. Mit anderen Worten handelt es sich um die Einführung einer "Multi-Programmablauf-Technik", einer Art parallel stattfindendes Berechnen von möglichen Bewegungsprofilen nach einer bedingten Programmverzweigung. Diese Bewegungsprofile werden am Zeitpunkt der Abfrage oder des Eintritts der Bedingung zur Durchführung der weiteren Bewegung bereitgestellt. Abhängig von der Bedingung wird letztlich jedoch nur das zu der Bedingung passende Bewegungsprofil für weitere Aktionen der Produktionsanlage aktiviert. Die übrigen Bewegungsprofile werden verworfen.

Durch die Vorabberechnung der Bewegungsprofile von allen möglichen Programmzweigen bzw. aus allen möglichen alternativen Steuerprogrammabschnitten nach einer bedingten Programmverzweigung ist keine Zwangssynchronisierung im Programmablauf erforderlich. Die durch Zwangssynchronisierung bedingte Verzögerung in der weiteren Abarbeitung des Steuerprogramms entfällt somit.

Vorteilhafte Ausgestaltungen des Verfahrens sind durch die Merkmale der Ansprüche 2 bis 6 gegeben.

Gemäß Anspruch 2 umfasst mindestens einer der alternativen Steuerprogrammabschnitte eine weitere bedingte Programmverzweigung, berechnet und speichert das Look-Ahead-Modul für den einen alternativen Teileprogrammabschnitt das alternative Bewegungsprofil bis zu der weiteren bedingten Programmverzweigung im Voraus und hält das alternative Bewegungsprofil an der bedingten Verzweigung zur Durchführung der weiteren Bewegung bereit.

Da sich bei mehreren bedingten Programmverzweigungen im Steuerprogramm die möglichen Bewegungsprofile in der Zukunft sehr stark vervielfachen, wird gemäß der Ausgestaltung der Erfindung nach Anspruch 2 das Bewegungsprofil nur bis zur nächsten bedingten Programmverzweigung in dem entsprechenden Steuerprogrammabschnitt berechnet. Sobald genau dieser Steuerprogrammabschnitt aufgrund der aktuellen Bedingung tatsächlich abgearbeitet wird, werden aus den der weiteren bedingten Verzweigung folgenden alternativen Steuerprogrammabschnitte die Bewegungsprofile bestimmt, gespeichert und bereit gestellt.

Gemäß Anspruch 3 ist eine maximale Anzahl der Steuerprogrammsätze vorgebbar, die von dem Look-Ahead-Modul zur Bestimmung des Bewegungsprofils berücksichtigt werden. Im Allgemeinen ist es nicht notwendig, das gesamte Bewegungsprofil im Voraus zu bestimmen. Die Steuerung hat genügend freie Rechenkapazität, um das Bewegungsprofil während der Abarbeitung des Steuerprogramms abschnittsweise weiter in der Zukunft zu bestimmen.

Die Bedingung wird oftmals von Werten einer Variablen gesteuert. Gemäß Anspruch 5 berücksichtigt die Variable ein Qualitätsmaß eines Arbeitsgeräts in der Produktionsanlage. Insbesondere wenn das Arbeitsgerät durch seine Benutzung verschleißt, wird der Abnutzungsgrad regelmäßig erfasst. Ist die Verschleißgrenze erreicht, erfolgt programmgesteuert ein Austausch. Dies trifft beispielsweise für Fräs- oder Bohrwerkzeuge in einer Werkzeugmaschine zu.

Gemäß Anspruch 6 berücksichtigt die Variable einen Zustand in der Produktionsanlage. Ein Beispiel dafür ist die Überwachung der Temperatur eines Motors.

Die zweitgenannte Aufgabe wird durch die Merkmale des Anspruchs 7 gelöst. Danach ist eine Produktionsanlage mit einer numerischen Steuerung ausgerüstet, die zur Durchführung des oben angegebenen Verfahrens ausgebildet ist.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: in einem Blockbild den grundsätzlichen Aufbau einer Werkzeugmaschine mit einer Werkzeugmaschinensteuerung,
- FIG 2: einen Ausschnitt eines Programmablaufplans eines Steuerprogramms mit bedingten Programmverzweigungen,
- FIG 3: einen Ausschnitt eines Steuerprogramms mit einer bedingten Programmverzweigung und mit nachfolgenden alternativen Steuerprogrammabschnitten und
- FIG 4: mehrere von dem Look-Ahead-Modul parallel berechnete alternative Bewegungsprofile nach einer bedingten Programmverzweigung.

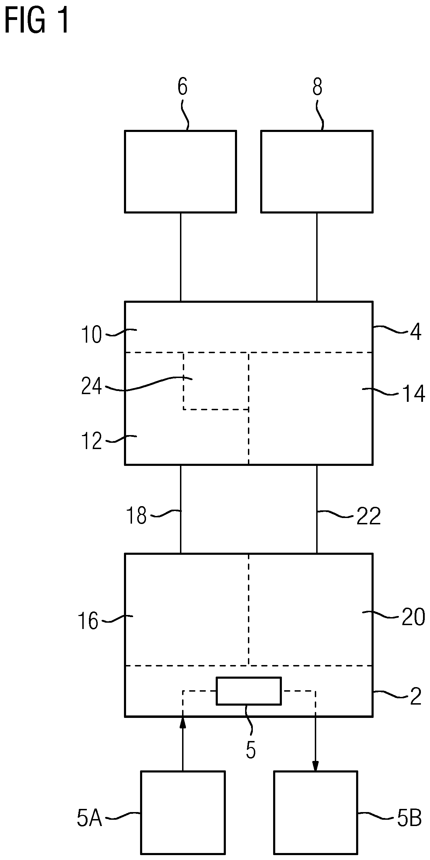

Beispielhaft für eine Produktionsmaschine zeigt das Blockbild in FIG 1 eine Werkzeugmaschine 2, die mit einer numerischen Werkzeugmaschinensteuerung 4 zur Bearbeitung eines Werkstücks 5 von einem Rohteil 5A zu einem Fertigteil 5B zusammenwirkt. Der Zugang eines Anwenders oder Bedieners zu der Werkzeugmaschinensteuerung 4 erfolgt über eine Ein-/Ausgabeeinheit 6, die auch als NC-Bedientafel oder Mensch-Maschine-Schnittstelle bezeichnet wird. Weiterhin ist eine Kommunikationsschnittstelle 8 vorgesehen, die eine Einbettung der numerisch gesteuerten Werkzeugmaschine 2 in ein Computernetzwerk ermöglicht; diese Betriebsart wird im Englischen als Distributed Numerical Control (DNC) bezeichnet.

Die Werkzeugmaschinensteuerung 4 ist in drei Hauptfunktionsbereiche bzw. Hauptfunktionalitäten unterteilt.

Ein erster Hauptfunktionsbereich, der sogenannte COM-Teil 10, erfüllt Kommunikationsaufgaben mit einer angeschlossenen Peripherie, wie zum Beispiel Eingangs- und Ausgangsbaugruppen, Sensoren, Endschaltern und dergleichen mehr. Des Weiteren dient der COM-Teil 10 der Kommunikation mit einer Ein-/Ausgabeeinheit 6. Er stellt zudem eine Programmierungsumgebung zur Verfügung, welche mindestens einen Programmeditor, oft aber auch Simulations- und Testeinrichtungen umfasst.

Die zweite Hauptfunktionalität der Werkzeugmaschinensteuerung 4, eine Wegesteuerung und Interpolation und damit die Erzeugung von Bewegungssollwerten für die Werkzeugmaschine 2, ist in einem NC-Kern 12 realisiert.

Schließlich dient die dritte Hauptfunktionalität der Werkzeugmaschinensteuerung 4 einer Anpasssteuerung 14, die der Anpassung der allgemeinen, auf das Werkstück 5 bezogenen Bewegungssteuerung aus dem NC-Kern 12 an die konkrete Werkzeugmaschine 2 dient. Die Anpasssteuerung 14umfasst das Ansteuern von Aktoren, das Erfassen von Sensorsignalen, das Realisieren von Überwachungsfunktionen, das Gewährleisten von Sicherheitsfunktionen usw. Die Anpasssteuerung 14 wird mittels einer PLC (programmable logic controller), also mit einer speicherprogrammierbaren Steuerung (SPS) ausgeführt.

Die Werkzeugmaschine 2 verwirklicht bei der Bearbeitung des Werkstücks 5 mit zugehörigen Maschinenbauelementen Bewegungen im Raum. Die Bewegungsrichtung der Maschinenbauelemente ist über Werkzeugmaschinenachsen oder Bewegungsachsen 16 definiert. Die daten- oder signaltechnische Verbindung der Werkzeugmaschinensteuerung 4 mit der Werkzeugmaschine 2 erfolgt bezüglich der Bewegungssollwerte für die Bewegungsachsen 16 über erste Steuerleitungen 18 und bezüglich von Aktoren und Sensoren 20 in der Werkzeugmaschine 2 über binäre Ein-/Ausgänge über zweite Steuerleitungen 22.

Der NC-Kern 12 umfasst weiterhin ein Look-Ahead-Modul 24. Das Look-Ahead-Modul 24 realisiert eine vorausschauende Geschwindigkeitsführung für die Bewegungsachsen 16. Mit der Look-Ahead-Funktionalität wird der Bahnsteuerbetrieb in der Werkzeugmaschine 2 optimiert. Um an Werkstücken hohe Oberflächengüten zu erzielen, ist eine gleichmäßige Bearbeitung notwendig. Deshalb sollte es während der Bearbeitung möglichst nicht zu Schwankungen der Bahngeschwindigkeit kommen. Ohne Look-Ahead-Funktionalität betrachtet die Werkzeugmaschinensteuerung 4 zur Ermittlung der möglichen Bahngeschwindigkeit nur den unmittelbar auf den aktuellen Verfahrsatz oder Steuerprogrammsatz folgenden Verfahrsatz. Beinhaltet der folgende Verfahrsatz nur einen kurzen Verfahrweg, muss die Werkzeugmaschinensteuerung 4 die Bahngeschwindigkeit vermindern (Bremsen im aktuellen Verfahrsatz), um eventuell rechtzeitig am Satzende des Folgesatzes anhalten zu können. Durch "Vorausschauen" über eine parametrierbare oder einstellbare Anzahl von Verfahrsätzen, die dem aktuellen Verfahrsatz folgen, kann mit der Look-Ahead-Funktionalität eine unter Umständen wesentlich höhere Bahngeschwindigkeit erzielt werden, da der Werkzeugmaschinensteuerung 4 jetzt wesentlich mehr Verfahrsätze zur Berechnung zur Verfügung stehen. Dadurch ergeben sich als Vorteile eine Bearbeitung mit durchschnittlich höherer Bahngeschwindigkeit sowie eine Verbesserung der Oberflächengüte durch Vermeidung von Brems- und Beschleunigungsvorgängen.

Diese vorstehend beispielhaft für eine Werkzeugmaschinensteuerung 4 beschriebene vorausschauende Geschwindigkeitsführung wird auch zur Steuerung anderer Produktionsanlagen mit hoher Bewegungsdynamik vorteilhaft eingesetzt. So ist die Look-Ahead-Funktionalität beispielsweise auch in der Robotik weit verbreitet eingesetzt.

Bei der Bearbeitung des Werkstücks 5 von dem Rohteil 5A zum Fertigteil 5B muss oft der aktuelle Zustand des bearbeiteten Werkstücks 5 oder ein Betriebszustand der Werkzeugmaschine 2 berücksichtigt werden. Die Berücksichtigung erfolgt derart, dass das Steuerprogramm für die weitere Bearbeitung relevante Zustände des Werkstücks 5 oder der Werkzeugmaschine 2 abfragt. Das Ergebnis dieser Abfrage steuert die weitere Werkstückbearbeitung. Programmtechnisch enthält das Steuerprogramm somit bedingte Programmverzweigungen mit mehreren, nachfolgend möglichen Bearbeitungsschritten.

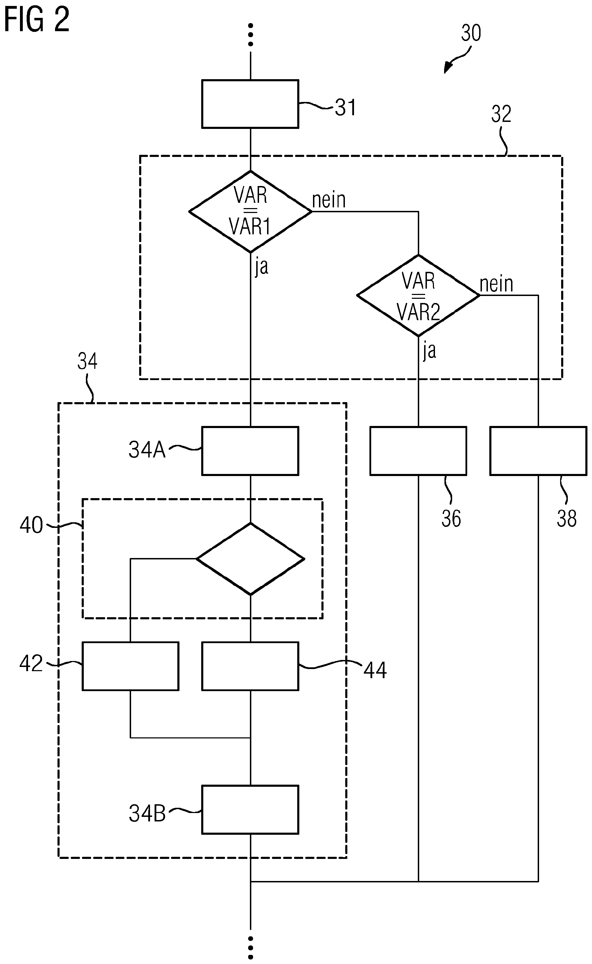

FIG 2 zeigt nun als Programmablaufplan einen Ausschnitt eines Steuerprogramms 30. Das Steuerprogramm 30 umfasst bis zu einer bedingten Programmverzweigung 32 aufeinanderfolgende Steuerprogrammsätze 31. In der bedingten Programmverzweigung 32 wird der Wert einer Variablen VAR abgefragt. Der Wert der Variablen VAR steht für einen bestimmten Werkstück- oder Werkzeugmaschinenzustand.

Hat die Variable VAR den Wert VAR1, dann wird im weiteren Verlauf ein erster alternativer Steuerprogrammabschnitt 34 abgearbeitet. Ist der Wert der Variablen VAR ungleich VAR1, dann wird abgefragt, ob die Variable VAR den Wert VAR2 aufweist. Besitzt die Variable VAR den Wert VAR2, dann wird im weiteren Verlauf der zweite alternative Steuerprogrammabschnitt 36 abgearbeitet. Falls der Wert der Variable VAR auch ungleich VAR2 ist, dann wird der dritte alternative Steuerprogrammabschnitt 38 abgearbeitet. Die entsprechende Vorgehensweise kann selbstverständlich auch auf mehr als drei mögliche Werte der Variablen VAR erweitert werden.

Der erste alternative Steuerprogrammabschnitt 34 umfasst neben aufeinanderfolgenden Steuerprogrammsätzen 34A und 34B eine weitere bedingte Programmverzweigung 40, die weitere alternative Steuerprogrammabschnitte 42 und 44 enthält. Ebenso wie bei der bedingten Programmverzweigung 32 steuert auch bei der weiteren bedingten Programmverzweigung 40 der Wert einer (anderen) Variablen den weiteren Programmablauf.

Alle aufeinanderfolgenden Programmsätze in den alternativen Steuerprogrammabschnitten 34, 36 und 38 werden in dem Look-Ahead-Modul 24 bis zu einer vorgegebenen maximalen Anzahl von Steuerprogrammsätzen bei der Berechnung der Führungsgrößen einer oder mehrerer Bewegungsachsen 16 berücksichtigt. Lediglich im ersten alternativen Steuerprogrammabschnitt 34 werden nur die aufeinander folgenden Programmsätze 34A bis zur weiteren bedingten Programmverzweigung 40 im Look-Ahead-Modul 24 zur Berechnung und Bereitstellung der Führungsgrößen der Bewegungsachsen 16 ausgewertet. Wird aufgrund des Wertes VAR1 der Variable VAR das Werkstück 5 entsprechend den Steuerprogrammsätzen im alternativen Steuerprogrammabschnitt 34 weiter bearbeitet, werden wiederum im Look-Ahead-Modul 24 auch die Bewegungsprofile entsprechend der weiteren alternativen Steuerprogrammabschnitte 42 und 44 berechnet, gespeichert und an der weiteren bedingten Programmverzweigung 40 zur weiteren Bearbeitung zur Verfügung gestellt.

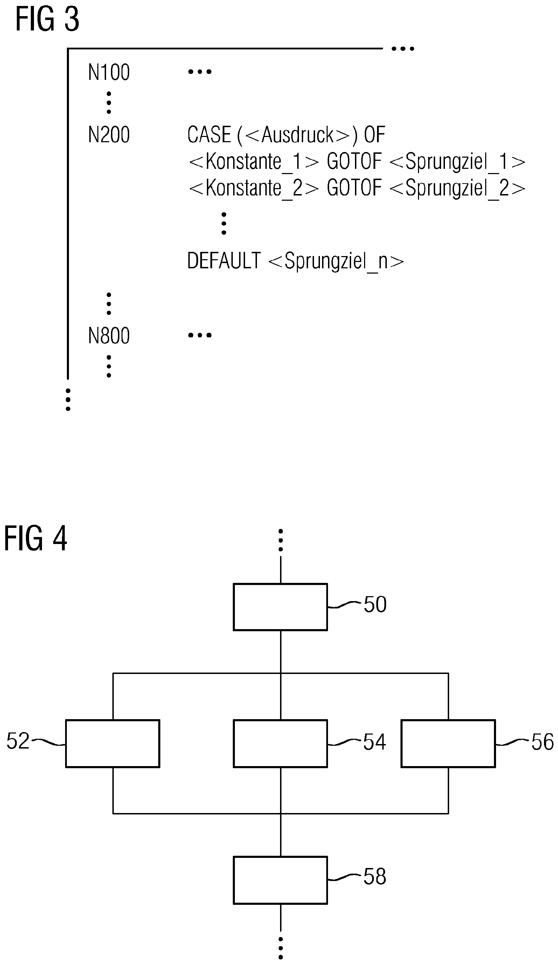

FIG 3 zeigt beispielhaft eine in einem Programmsatz mögliche Syntax einer bedingten Verzweigung, die als dort als CASE-Funktion bezeichnet wird. Sie bietet die Möglichkeit, den aktuellen Wert (Typ: INT) einer Variablen oder einer Rechenfunktion, dort mit <Ausdruck> bezeichnet, zu überprüfen und abhängig vom Ergebnis, das als <Konstante_1>, <Konstante_2> usw. bezeichnet ist, an unterschiedliche Stellen, dort als <Sprungziel_1>, <Sprungziel_2>, ... <Sprungziel_n> bezeichnet, im Steuerprogramm zu springen.

Im Einzelnen hat die bedingte Programmverzweigung (CASE ... OF ... DEFAULT) in FIG 3 die folgende Bedeutung:
- CASE:: leitet die Sprunganweisung ein.
- <Ausdruck>:: steht für die Variable oder Rechenfunktion,
- OF:: erster angegebener Wert für die Variable oder Rechenfunktion.
- <Konstante_1>:: erster angegebener Wert für die Variable oder Rechenfunktion.
- <Konstante_2>:: zweiter angegebener konstanter Wert für die Variable oder Rechenfunktion.
- DEFAULT:: Für die Fälle, in denen die Variable oder Rechenfunktion keinen der angegebenen konstanten Werte annimmt, kann mit der DEFAULT-Anweisung ein Sprungziel bestimmt werden. Falls die DEFAULT-Anweisung nicht programmiert ist, wird in diesen Fällen der auf die CASE-Anweisung folgende Satz zum Sprungziel.
- GOTOF:: Sprunganweisung mit Sprungziel in Richtung Programmende.
- <Sprungziel_1>:: Auf dieses Sprungziel wird verzweigt, wenn der Wert der Variablen oder Rechenfunktion der ersten angegebenen Konstanten entspricht.
- <Sprungziel_2>:: Auf dieses Sprungziel wird verzweigt, wenn der Wert der Variablen oder Rechenfunktion der zweiten angegebenen Konstanten entspricht.
- <Sprungziel_n>:: Auf dieses Sprungziel wird verzweigt, wenn der Wert der Variablen oder Rechenfunktion keinen der angegebenen konstanten Werte annimmt.

Eine praktische Anwendung einer bedingten Verzweigung im Zusammenhang mit einer Massenfertigung soll nachfolgend beschrieben werden.

Um ein Loch in einem Werkstück mit einem Gewinde zu versehen, muss dieses vorbearbeitet/vorgebohrt werden. Mit einem bestimmten Bohrer wird ein sogenanntes Kernloch gebohrt. Danach wird mit einem Gewindebohrer ein Gewinde in das Kernloch geschnitten/gebohrt. Der Gewindebohrer würde zerstört, wenn das Kernloch nicht vorhanden ist oder nur unzureichend erstellt wurde.

Beim Einfahren des Gewindebohrers in das erwartete Kernloch wird in Echtzeit der Vorschubstrom der beteiligten Bewegungsachsen 16, beispielsweise die Z-Achse an einer Bohrmaschine, überprüft. Wenn dieser zu hoch ist, bedeutet das, dass Kernloch nicht vorhanden oder nur unzureichend gebohrt ist. Der Gewindebohrer würde in diesem Fall zerstört werden.

An der Stelle des Steuerprogramms 30, an der gemessen und entschieden wird, ist es notwendig, eine bedingte Programmverzweigung für die folgenden Zustände zu programmieren:
**Zustand A:** Der Strom ist in einem normalen Bereich, er ist nicht hoch. Das ist ein Indiz dafür, dass das Kernloch vorhanden ist. Die Bearbeitung des Werkstücks läuft normal weiter.
**Zustand B:** Der Strom ist hoch. Das ist ein Indiz, dass das Kernloch fehlt. Die Bearbeitung des Werkstücks läuft in einen Fehlerzweig.
   Im Fehlerzweig sind wiederum zwei Zustände denkbar, die das Bearbeitungswerkzeug betreffen.
**Zustand C:** Die Länge des Kernlochbohrers liegt noch im zulässigen Verschleißbereich. Zur weiteren Bearbeitung wird das Werkstück zum Nacharbeiten geparkt.
**Zustand D:** Die Verschleißgrenze des Kernlochbohrers ist erreicht oder überschritten. Das damit bearbeitete Werkstück wird ausgesondert.

FIG 4 veranschaulicht mehrere Bewegungsprofile, die mit Hilfe des Look-Ahead-Moduls 24 vor der Bewegung selbst aus aufeinanderfolgenden Programmsätzen alternativer Programmabschnitte berechnet und gespeichert wurden. Dabei wird Bezug auf das Ablaufdiagramm in FIG 2 genommen.

Wie schon eingangs angegeben ist, umfasst das Bewegungsprofil für aufeinanderfolgende Taktzeitpunkte Führungsgrößen zur Weg-Zeit-Bewegung einer oder auch mehrerer Bewegungsachsen 16 der Werkzeugmaschine 2.

Ein erstes Bewegungsprofil 50 wird mit dem Look-Ahead-Modul 24 aus den aufeinanderfolgenden Steuerprogrammsätzen 31 berechnet, die vor der bedingten Programmverzweigung 32 abzuarbeiten sind. Vor dem Erreichen der bedingten Programmverzweigung 32, also vor der dort durchzuführenden Abfrage der Werkzeug- und/oder Werkzeugmaschinenzustände, sind von dem Look-Ahead-Modul 24 ebenfalls schon von den alternativen Steuerprogrammabschnitten 34, 36 und 38 alternative Bewegungsprofile 52 bzw. 54 bzw. 56 berechnet worden. Für das Bewegungsprofil 52 sind, wie schon vorstehend beschrieben ist, allerdings nur die aufeinanderfolgenden Steuerprogrammsätze 34A des Steuerprogrammabschnitts 34 berücksichtigt.

Das für die zukünftige Bearbeitung des Werkstücks benötigte Bewegungsprofil 50 ist zusammen mit den zukünftig möglicherweise zu verwendenden Bewegungsprofilen 52, 54, 56 in einem Programmspeicher (hier nicht dargestellt) des Look-Ahead-Moduls 24 abgelegt. Falls die maximale Anzahl der vom Look-Ahead-Modul 24 auszuwertenden Steuerprogrammsätze noch nicht erreicht sind, wird ebenfalls aus den nach den alternativen Steuerprogrammabschnitten 34, 36, 38 abzuarbeitenden Steuerprogrammsätzen noch ein Bewegungsprofil 58 berechnet und in dem Programmspeicher abgelegt. Die Bewegungsprofile 50, 52, 54, 56 und ggf. 58 stehen somit zur Steuerung der Werkzeugmaschine 2 zur Verfügung. Die Bearbeitung des Werkstücks 5 kann dadurch an der bedingten Programmverzweigung 32 ohne Verzögerung fortgesetzt werden. Ist beispielsweise durch den Wert der Variablen VAR ungleich VAR1 oder ungleich VAR2 zur Bearbeitung der dritte alternative Steuerprogrammabschnitt 38 vorgegeben, dann wird nach dem Bewegungsprofil 50 ohne Wartezeit das Bewegungsprofil 56 abgearbeitet. Die Bewegungsprofile 52 und 54 werden in diesem Fall verworfen, also aus dem Programmspeicher gelöscht. Nach dem Bewegungsprofil 56 werden die weiteren Führungsgrößen der Bewegungsachsen 16 dann vom Bewegungsprofil 58 vorgegeben.

Zusammengefasst betrifft die vorliegende Erfindung somit folgenden Sachverhalt:
Eine numerisch gesteuerte Produktionsanlage, insbesondere eine Werkzeugmaschine 2, ist mit einer numerischen Steuerung 4 verbunden. In der numerischen Steuerung 4 ist ein Steuerprogramm mit aufeinander folgenden Programmsätzen vorhanden. Die numerische Steuerung 4 umfasst ein Look-Ahead-Modul 24, das aus mehreren aufeinanderfolgenden Steuerprogrammsätzen 31 vor einer Bewegung selbst für mindestens eine Bewegungsachse 16 ein Bewegungsprofil 50 bestimmt, das für aufeinanderfolgende Taktzeitpunkte Führungsgrößen zur Weg-Zeit-Bewegung für die mindestens eine Bewegungsachse 16 umfasst. Das Steuerprogramm umfasst mindestens eine von einer Bedingung gesteuerte Programmverzweigung 32, 40 mit mehreren nachfolgenden alternativen Steuerprogrammabschnitten 34, 36, 38, die festlegt, welcher der alternativen Steuerprogrammabschnitte 34, 36, 38 in Abhängigkeit der Bedingung weiter ausgeführt wird. Das Look-Ahead-Modul 24 berechnet für jeden alternativen Steuerprogrammabschnitt 34, 36, 38 vor einer weiteren Bewegung ein alternatives Bewegungsprofil 52, 54, 56, speichert es und hält es an der bedingten Programmverzweigung 32, 40 zur Durchführung der weiteren Bewegung bereit.

Die vorliegende Erfindung weist viele Vorteile auf. Insbesondere ist es möglich, auch bei bedingten Programmanweisungen eine kontinuierliche Ausführung des Steuerprogramms 30 zu gewährleisten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die nachstehenden Ansprüche definiert wird.

## Patentansprüche

1. Verfahren zum Betrieb einer numerisch gesteuerten Produktionsanlage, insbesondere einer Werkzeugmaschine (2), die mit einer numerischen Steuerung (4) verbunden ist,
- wobei in der numerischen Steuerung (4) ein Steuerprogramm mit aufeinander folgenden Steuerprogrammsätzen vorhanden ist,
- wobei das Steuerprogramm mindestens eine von einer Bedingung gesteuerte Programmverzweigung (32, 40) mit mehreren nachfolgenden alternativen Steuerprogrammabschnitten (34, 36, 38) umfasst, die festlegt, welcher der alternativen Steuerprogrammabschnitte (34, 36, 38) in Abhängigkeit der Bedingung weiter ausgeführt wird,
**dadurch gekennzeichnet,**
**dass** die numerische Steuerung (4) ein Look-Ahead-Modul umfasst, wobei das Look-Ahead-Modul (24) aus mehreren aufeinanderfolgenden Steuerprogrammsätzen (31) vor einer Bewegung selbst für mindestens eine Bewegungsachse (16) ein Bewegungsprofil (50) bestimmt, das für aufeinanderfolgende Taktzeitpunkte Führungsgrößen zur Weg-Zeit-Bewegung für die mindestens eine Bewegungsachse (16) umfasst, und wobei
das Look-Ahead-Modul (24) für jeden alternativen Steuerprogrammabschnitt (34, 36, 38) vor einer weiteren Bewegung ein alternatives Bewegungsprofil (52, 54, 56) berechnet und speichert und an der bedingten Programmverzweigung (32, 40) zur Durchführung der weiteren Bewegung bereit hält.

2. Verfahren nach Anspruch 1,
**dadurch gekennzeichnet,**
**dass** mindestens einer der alternativen Steuerprogrammabschnitte (34) eine weitere bedingte Programmverzweigung (40) umfasst und dass das Look-Ahead-Modul (24) für den einen alternativen Teileprogrammabschnitt (34) das alternative Bewegungsprofil (52) bis zu der weiteren bedingten Programmverzweigung (40) im Voraus berechnet und speichert und an der bedingten Verzweigung (40) zur Durchführung der weiteren Bewegung bereit hält.

3. Verfahren nach Anspruch 1 oder 2,
**dadurch gekennzeichnet,**
**dass** eine maximale Anzahl der Steuerprogrammsätze vorgebbar ist, die von dem Look-Ahead-Modul (24) zur Bestimmung des Bewegungsprofils (50, 52, 54, 56, 58) berücksichtigt wird.

4. Verfahren nach einem der vorstehenden Ansprüche,
**dadurch gekennzeichnet,**
**dass** die Bedingung von Werten (VAR1, VAR2) einer Variablen (VAR) gesteuert ist.

5. Verfahren nach Anspruch 4,
**dadurch gekennzeichnet,**
**dass** die Variable (VAR) ein Qualitätsmaß eines Arbeitsgeräts in der Produktionsanlage (2) berücksichtigt.

6. Verfahren nach Anspruch 4,
**dadurch gekennzeichnet,**
**dass** die Variable (VAR) einen Zustand in der Produktionsanlage (2) berücksichtigt.

7. Produktionsanlage, insbesondere Werkzeugmaschine, mit einer numerischen Steuerung (4), die zur Durchführung des Verfahrens nach einem der Ansprüche 1 bis 6 ausgebildet ist.

## Claims

1. Method for operating a numerically controlled production system, in particular a machine tool (2), which is connected to a numerical controller (4),
- wherein a control program with successive control program sets is provided in the numerical controller (4),
- wherein the control program comprises at least one program branching (32, 40) which is controlled by a condition and which comprises a plurality of successive alternative control program sections (34, 36, 38), said program branching determining which of the alternative control program sections (34, 36, 38) is additionally run depending on the condition, **characterised in that**
the numerical controller (4) comprises a look-ahead module wherein from a plurality of successive control program sets (31) prior to a movement the look-ahead module (24) determines a movement profile (50) for at least one movement axis (16), the profile comprising guidance variables for a travel/time movement for the at least one movement axis (16) for successive clock time points, and wherein the look-ahead module (24) calculates an alternative movement profile (52, 54, 56) for each alternative control program section (34, 36, 38) prior to an additional movement, stores it, and holds it ready at the required program branching (32, 40) in order to carry out the additional movement.

2. Method according to claim 1,
**characterised in that**
at least one of the alternative control program sections (34) comprises a further conditional program branching (40) and that for the one alternative parts program section (34), the look-ahead module (24) calculates the alternative movement profile (52) in advance, up to the further conditional program branching (40) and stores it and holds it ready at the conditional branching (40) in order to carry out the additional movement.

3. Method according to claim 1 or 2,
**characterised in that**
a maximum number of control program sets can be specified, which is taken into account by the look-ahead module (24) in order to determine the movement profile (50, 52, 54, 56, 58).

4. Method according to one of the preceding claims, **characterised in that**
the condition of values (VAR1, VAR2) of a variable (VAR) is controlled.

5. Method according to claim 4,
**characterised in that**
the variable (VAR) takes into account a quality criterion of a tool in the production system (2).

6. Method according to claim 4,
**characterised in that**
the variable (VAR) takes into account a state in the production system (2).

7. Production system, in particular machine tool, with a numerical controller (4) which is embodied to carry out the method according to one of claims 1 to 6.

## Revendications

1. Procédé pour faire fonctionner une installation de production à commande numérique, notamment une machine-outil (2), qui est reliée à une commande (4) numérique,
- dans lequel il y a, dans la commande (4) numérique, un programme de commande ayant des blocs successifs,
- dans lequel le programme de commande comprend un saut (32, 40) conditionnel ayant plusieurs parties (34, 36, 38) alternatives successives de programme de commande, qui fixe la partie (34, 36, 38) de programme de commande alternative que l'on continue à exécuter en fonction de la condition, **caractérisé**
**en ce que** la commande (4) numérique comprend un module Look Ahead, dans lequel le module (24) Look Ahead détermine à partir de plusieurs blocs (31) successifs de programme de commande, avant un déplacement d'au moins un axe (16) lui-même de déplacement, un profil (50) de déplacement, qui comprend, pour des instants de cadencement successifs, des grandeurs de guidage pour le déplacement chemin-temps du au moins un axe (16) de déplacement et dans lequel
le module (24) Look Ahead calcule et met en mémoire, pour chaque partie (34, 36, 38) alternative du programme de commande, avant un autre déplacement, un profil (52, 54, 46) alternatif de déplacement et le tient prêt au saut (32, 40) de programme conditionnel pour effectuer l'autre déplacement.

2. Procédé suivant la revendication 1,
**caractérisé**
**en ce qu'**au moins l'une des parties (34) alternatives du programme de commande comprend un autre saut (40) de programme conditionnel et en ce que le module (24) Look Ahead calcule à l'avance et met en mémoire, pour la une partie (34) alternative de programme, le profil (52) alternatif de déplacement jusqu'à l'autre saut (40) de programme conditionnel et le tient prêt au saut (40) conditionnel pour effectuer l'autre déplacement.

3. Procédé suivant la revendication 1 ou 2,
**caractérisé**
**en ce qu'**il peut être prescrit un nombre maximum de blocs de commande, qui est pris en compte par le module (24) Look Ahead pour la détermination du profil (50, 52, 54, 56, 58) de déplacement.

4. Procédé suivant l'une des revendications précédentes, **caractérisé**
**en ce que** la condition est commandée par des valeurs (VAR1, VAR2) d'une variable (VAR).

5. Procédé suivant la revendication 4,
**caractérisé**
**en ce que** la variable (VAR) prend en compte une mesure de qualité d'un outil dans l'installation (2) de production.

6. Procédé suivant la revendication 4,
**caractérisé**
**en ce que** la variable (VAR) prend en compte un état dans l'installation (2) de production.

7. Installation de production, notamment machine-outil, ayant une commande (4) numérique qui est constituée pour effectuer le procédé suivant l'une des revendications 1 à 6.
